# EUROPÄISCHE PATENTSCHRIFT

(11) **EP 0 781 984 B1**
(45) Veröffentlichungstag und Bekanntmachung des Hinweises auf die Patenterteilung: **17.07.2002**
(21) Anmeldenummer: 95710019.1
(22) Anmeldetag: 11.12.1995
(51) Int. Cl.: G01N 1/20

(54) **Vorrichtung zur Entnahme einer volumen-einstellbaren Probe aus einem strömenden Fluid**
Apparatus for taking volume-adjustable samples from moving fluid
Appareil pour prise d'échantillons à volume réglable d'un fluide en mouvement

(43) Veröffentlichungstag der Anmeldung: 02.07.1997
(73) Patentinhaber: Endress + Hauser Wetzer GmbH + Co. KG, D-87484 Nesselwang (DE)
(72) Erfinder: Dangelmaier, Peter, Dipl.Ing., D-87487 Wiggensbach (DE); Steiger, Martin, D-87459 Pfronten-Weissbach (DE)
(74) Vertreter: Andres, Angelika

(56) Entgegenhaltungen:
- WO-A-94/23564
- DE-A- 2 459 224
- US-A- 3 769 841
- US-A- 3 798 972
- US-A- 3 940 993
- US-A- 3 994 170

## Beschreibung

Die Erfindung beschäftigt sich mit Vorrichtungen zur Entnahme einer Probe aus einem in einem offenen Gerinne strömenden oder in einem Rohr drucklos fließenden Fluid, wobei das Volumen der Probe vom Benutzer der Vorrichtung eingestellt, also gewählt, werden kann.

Bei einer herkömmlichen Vorrichtung ist das Volumen der zu entnehmenden Probe lediglich dadurch einstellbar, daß ein dem Ansaugen des Fluids dienendes, in eine Kammer zur Aufnahme der Probe ragendes Ansaug/Ablaufrohr oder ein entsprechender Schlauch durch Absägen oder Abschneiden dauernd verkürzt wird, das/der danach verschlossen wird.

Bei dieser herkömmlichen Vorrichtung läßt sich also das Volumen der Probe nur einmal einstellen, und zwar meist bei deren erster Inbetriebnahme. Während des Betriebs der Vorrichtung ist somit eine Anpassung des Volumens der Probe an sich ändernde Bedingungen nicht mehr möglich.

In der WO-A 94/23564 ist eine Vorrichtung zur Entnahme einer volumen-einstellbaren Probe aus einem in einem offenen Gerinne strömenden oder in einem Rohr drucklos fließenden Fluid beschrieben
- mit einer Kammer zur Aufnahme der Probe,
- mit einer in das Fluid tauchenden und mit einer Öffnung in einem Boden der Kammer verbundenen Ansaug/Ablaufleitung,
- mit einer im Boden der Kammer angeordneten Proben-Abflußleitung und
- mit einem senkrecht stehenden Ansaug-Innenrohr, in das die Ansaug/Ablaufleitung mündet.

Bei dieser Vorrichtung ist das Volumen der zu entnehmenden Probe mittels eines vertikal verschiebbaren Füllstandgebers einstellbar gemacht.

Eine Aufgabe der in den Ansprüchen definierten Erfindung besteht darin, die Einstellbarkeit des Volumens der zu entnehmenden Probe auf andere Art und Weise, als es in der WO-A beschrieben ist, zu erreichen.

Ein Vorteil der Erfindung besteht darin, daß durch einfache Verstellung des relativen Drehwinkels zwischen Ansaug-Innen- und -Außenrohr das Volumen der zu entnehmenden Probe entweder direkt-manuell oder elektronisch-manuell oder voll-elektronisch, also in Abhängigkeit eines gemessenen Parameters eingestellt werden kann.

Die Erfindung wird nun anhand eines in den Figuren der Zeichnung dargestellten Ausführungsbeispiels einer Vorrichtung näher erläutert.
- Fig. 1 zeigt: schematisch im Schnitt den Aufbau einer Vorrichtung, eingestellt auf ein erstes vorgegebenes Volumen, und
- Fig. 2 zeigt: den Aufbau der Vorrichtung von Fig. 1, eingestellt auf ein zweites vorgegebenes und größeres Volumen.

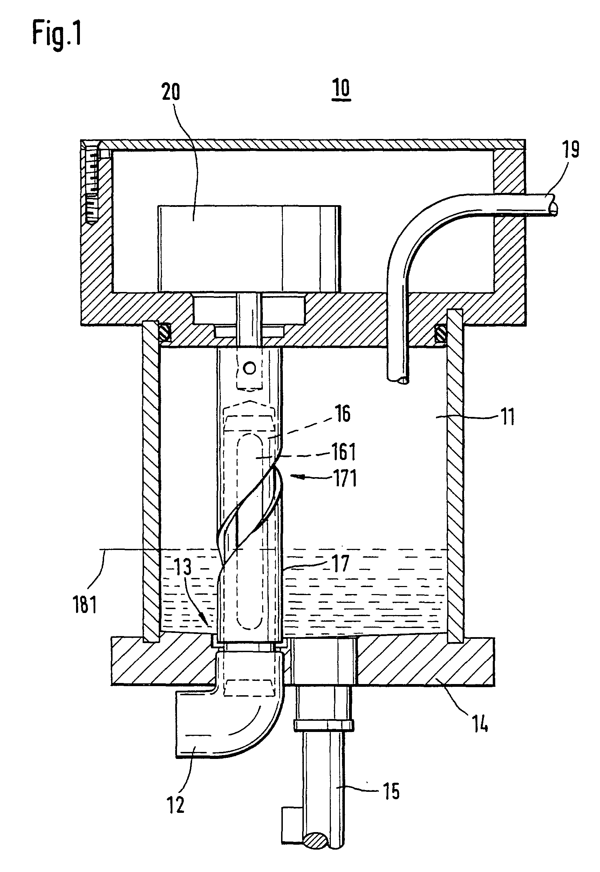

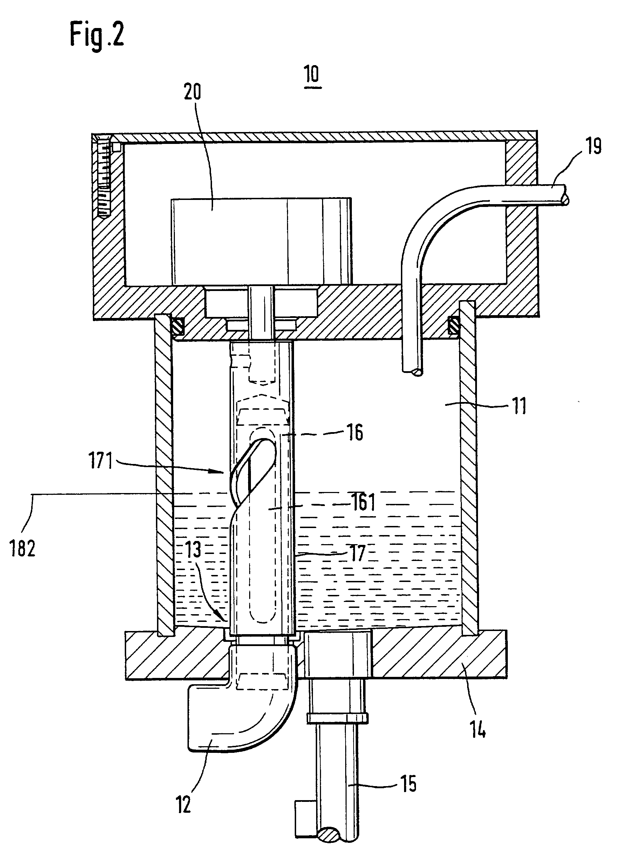

Bei der in den Fig. 1 und 2 jeweils schematisch gezeigten Vorrichtung 10 zur Entnahme einer volumen-einstellbaren Probe aus einem in einem offenen Gerinne strömenden oder in einem Rohr drucklos fließenden Fluid, welche beide der Übersichlichkeit halber nicht dargestellt sind, ist eine Kammer 11 zur Aufnahme der Probe vorgesehen.

In das Fluid taucht eine Ansaug/Ablaufleitung 12, die mit einer Öffnung 13 in einem Boden 14 der Kammer 11 verbunden ist. Im Boden 14 ist ferner eine Proben-Abflußleitung 15 angeordnet. Die Ansaug/Ablaufleitung 12 mündet in ein senkrecht stehendes und in der Kammer 11 angeordnetes Ansaug-Innenrohr 16, über das ein drehbares Ansaug-Außenrohr 17 geschoben ist.

Die Wand des Ansaug-Innenrohrs 16 ist mit einem achs-parallelen Langloch 161 und die Wand des Ansaug-Außenrohrs 17 mit einem über einen Drehwinkel von weniger als 360° verlaufenden schraubenförmigen Langloch 171 versehen. Somit ergibt sich das mit der Fluidprobe füllbare Volumen der Kammer 11 aus der relativen Stellung der beiden Langlöcher 161, 171 zueinander, d.h. aus dem relativen Drehwinkel des Ansaug-Außenrohrs 17 bezüglich des feststehenden Ansaug-Innenrohrs 16.

Da in Fig. 1 der am tiefsten liegende Schnittpunkt der beiden Langlöcher 161, 171 tiefer liegt als in Fig. 2, die eine andere Stellung des Langlochs 171 zeigt, kann die Kammer 11 in Fig. 1 nur bis zu dem Füllniveau 181 gefüllt werden, während in Fig. 2 eine Füllung bis zum höheren Füllniveau 182 möglich ist.

Diese Füllung der Kammer 11 wird über eine Luftleitung 19 ermöglicht, die von oben in die Kammer 11 reicht und über die die Kammer einerseits dem Atmosphärendruck oder andererseits, z.B. mittels einer Pumpe, einem geeigneten Unterdruck ausgesetzt werden kann, so daß das Fluid angesaugt wird.

Nach dem z.B. vollständigen Füllen der Kammer wird der Unterdruck wieder abgeschaltet und der Atmosphärendruck wieder hergestellt, so daß die oberhalb des jeweils eingestellten Füllniveaus befindliche und somit überschüssige Menge des Fluids über die Ansaug/Ablaufleitung 12 wieder abfließen kann und lediglich das eingestellte Volumen in der Kammer verbleibt. Nach dem Abfließen des überschüssigen Fluids wird das eingestellte Volumen über die Proben-Abflußleitung 15 zur weiteren Verwendung, z.B. zur chemischen Analyse, abgelassen.

Die erwähnte Verdrehung des Ansaug-Außenrohrs 17 kann z.B. mittels einer nichtgezeigten Kurbel durch den Benutzer von Hand erfolgen. In den Fig. 1 und 2 ist jedoch eine andere bevorzugte Weise der Verdrehung des Ansaug-Außenrohrs 17 dargestellt, nämlich mittels eines Motors 20, z.B. eines Schrittmotors.

Dem Motor 20 ist eine nicht-dargestellte elektronische Steuerung zugeordnet, in die vom Benutzer Daten, die den Drehwinkel des Ansaug-Außenrohrs bestimmen, einzugeben sind. Solche (Schritt-)Motor-Steuerungen sind handelsüblich und dem Fachmann geläufig.

Es ist auch möglich, der elektronischen Steuerung das Signal einer nicht-dargestellten Sensoranordnung zuzuführen, die ein dem momentanen Durchflußwert des Fluids proportionales analoges Ausgangssignal abgibt, so daß der Drehwinkel des Ansaug-Außenrohrs 17 sich diesem Wert anpaßt bzw. diesem Wert nachgeführt werden kann.

Hierzu können alle gängigen und handelsüblichen Durchflußmeß-Anordnungen verwendet werden. Diese geben ein dem momentanen und somit zeitvariablen Durchfluß proportionales analoges Ausgangssignal ab, z.B. ein im Bereich zwischen 0 mA und 20 mA liegendes Stromsignal, das der Steuerung zugeführt wird.

Selbstverständlich liegt es im Rahmen der Erfindung, im Sinne einer kinematischen Vertauschung das Ansaug-Außenrohr 17 zu fixieren und das Ansaug-Innenrohr 16 ihm gegenüber drehbar zu machen, so daß wiederum der relative Drehwinkel der beiden Ansaugrohre das Volumen der Probe festlegt.

## Patentansprüche

1. Vorrichtung (10) zur Entnahme einer volumen-einstellbaren Probe aus einem in einem offenen Gerinne strömenden oder in einem Rohr drucklos fließenden Fluid
- mit einer Kammer (11) zur Aufnahme der Probe,
- mit einer in das Fluid tauchenden und mit einer Öffnung (13) in einem Boden (14) der Kammer verbundenen Ansaug/Ablaufleitung (12),
- mit einer im Boden der Kammer angeordneten Proben-Abflußleitung (15),
- mit einem senkrecht stehenden Ansaug-Innenrohr (16), in das die Ansaug/Ablaufleitung mündet,
- mit einem über das Ansaug-Innenrohr (16) geschobenen, drehbaren Ansaug-Außenrohr (17),
-- wobei entweder die Wand des Ansaug-Innenrohrs (16) mit einem achs-parallelen Langloch (161) und die Wand des Ansaug-Außenrohrs (17) mit einem über einen Drehwinkel von weniger als 360° verlaufenden schraubenförmigen Langloch (171) versehen ist,
-- oder die Wand des Ansaug-Innenrohrs (16) mit einem über einen Drehwinkel von weniger als 360° verlaufenden schraubenförmigen Langloch und die Wand des Ansaug-Außenrohrs (17) mit einem achs-parallelen Langloch versehen ist, und
- mit einem Drehantrieb des Ansaug-Außenrohrs (17).

2. Vorrichtung nach Anspruch 1 mit einer Kurbel zur Drehung des Ansaug-Außenrohrs.

3. Vorrichtung nach Anspruch 1 mit einer elektronischen Steuerung eines Motors (20) zur Drehung des Ansaug-Außenrohrs (17), in die vom Benutzer Daten, die den Drehwinkel des Ansaug-Außenrohrs bestimmen, einzugeben sind.

4. Vorrichtung nach Anspruch 1 mit einer elektronischen Steuerung eines Motors (20) zur Drehung des Ansaug-Außenrohrs (17) und mit einer Sensoranordnung, die ein dem momentanen Durchfluß des Fluids proportionales analoges Ausgangssignal abgibt, das den Drehwinkel des Ansaug-Außenrohrs (17) bestimmt.

## Claims

1. A device (10) for taking a sample of adjustable volume from a fluid which is streaming in an open channel or which is flowing in a pressureless manner in a pipe,
- having a chamber (11) to receive the sample,
- having a suction/outflow line (12) which projects into the fluid and which is connected to an opening (13) in a base (14) of the chamber,
- having a sample-discharge line (15) arranged in the base of the chamber,
- having a vertical inner suction-pipe (16) into which the suction/outflow line issues,
**characterised in that** the device has a rotatable outer suction-pipe (17) pushed over the inner suction-pipe (16),
- - wherein either the wall of the inner suction-pipe (16) is provided with an axially-parallel elongate hole (161) and the wall of the outer suction-pipe (17) with a helical elongate hole (171) extending through less than 360°,
- - or the wall of the inner suction-pipe (16) is provided with a helical elongate hole extending through less than 360° and the wall of the outer suction-pipe (17) with an axially-parallel elongate hole,
and **in that** the device has a rotatatory drive of the outer suction-pipe (17).

2. A device according to Claim 1, having a crank for rotation of the outer suction-pipe.

3. A device according to Claim 1, having an electronic controlling means of a motor (20) for rotation of the outer suction-pipe (17), into which controlling means there is to be fed, by the user, data determining the angle of rotation of the outer suction-pipe.

4. A device according to Claim 1, having an electronic controlling means of a motor (20) for rotation of the outer suction-pipe (17), and having a sensor arrangement which emits an analogue output signal which is proportional to the present flow of the fluid and which determines the angle of rotation of the outer suction-pipe (17).

## Revendications

1. Dispositif (10) de prise d'un échantillon, dont le volume est réglable, d'un fluide coulant sans pression dans un canal ouvert ou un tube, avec
- une chambre (11) pour recevoir l'échantillon,
- un conduit d'aspiration/de refoulement (12) plongé dans le fluide et en communication avec une ouverture (13) prévue dans un fond (14) de la chambre,
- un conduit d'écoulement (15) de l'échantillon disposé dans le fond de la chambre,
- un tube d'aspiration intérieur (16) vertical débouchant dans le conduit d'aspiration/de refoulement,
**caractérisé en ce que** le dispositif présente un tube d'aspiration extérieur (17) rotatif glissé sur le tube d'aspiration intérieur (16), où
- soit la paroi du tube d'aspiration intérieur (16) est pourvue d'un trou oblong (161) parallèle à l'axe et la paroi du tube d'aspiration extérieur (17) est pourvue d'un trou oblong (171) en forme de vis s'étendant sur un angle de rotation inférieur à 360°,
- soit la paroi du tube d'aspiration intérieur (16) est pourvue d'un trou oblong en forme de vis s'étendant avec un angle de rotation inférieur à 360° et la paroi du tube d'aspiration extérieur (17) est pourvue d'un trou oblong parallèle à l'axe,
et **en ce qu'**il présente un entraînement en rotation du tube d'aspiration extérieur (17).

2. Dispositif selon la revendication 1 comprenant une manivelle pour la rotation du tube d'aspiration extérieur.

3. Dispositif selon la revendication 1 comprenant une commande électronique d'un moteur (20) pour la rotation du tube d'aspiration extérieur (17), dans laquelle l'utilisateur doit introduire des données déterminant l'angle de rotation du tube d'aspiration extérieur.

4. Dispositif selon la revendication 1 comprenant une commande électronique d'un moteur (20) pour la rotation du tube d'aspiration extérieur (17), et un dispositif de capteurs fournissant un signal de sortie analogique proportionnel au débit momentané du fluide, qui détermine l'angle de rotation du tube d'aspiration extérieur (17).
